# EUROPEAN PATENT SPECIFICATION

(11) **EP 1 936 179 B1**
(45) Date of publication and mention of the grant of the patent: **01.04.2015**
(21) Application number: 07150158.9
(22) Date of filing: 19.12.2007
(51) Int. Cl.: F02M 37/22

(54) **Fuel filter**
Kraftstofffilter
Filtre de carburant

(30) Priority: 20.12.2006 JP 2006342333
(43) Date of publication of application: 25.06.2008
(73) Proprietor: TOYOTA JIDOSHA KABUSHIKI KAISHA, Toyota-shi, Aichi-ken, 471-8571 (JP); Kyosan Denki Co., Ltd., Koga City, Ibaraki 306-0206 (JP)
(72) Inventor: KOGUCHI, Yoshiichi, Koga City, Ibaraki-Pref., 306-0206 (JP); MATSUSHITA, Yoshiharu, Koga City, Ibaraki-Pref., 306-0206 (JP); OTSUBO, Suminobu, Toyota-shi, Aichi-ken, 471-8571 (JP); NAGATA, Satoshi, Toyota-shi, Aichi-ken, 471-8571 (JP)
(74) Representative: Winter, Brandl, Fürniss, Hübner, Röss, Kaiser, Polte - Partnerschaft mbB

(56) References cited:
- EP-A- 0 547 951
- EP-A- 0 858 825
- WO-A-00/36290
- FR-A- 2 733 009
- US-A- 5 895 574

## Description

### BACKGROUND OF THE INVENTION

### 1. Field of the Invention

The invention relates to a fuel filter provided in a fuel supply system of a motor vehicle or the like. In particular, the invention relates to a fuel filter that restrains drawbacks, such as an engine trouble and the like, that are caused by an all-at-once discharge of an air having separated from fuel and having accumulated within a fuel filter.

### 2. Description of the Related Art

In engines of motor vehicles and the like, fuel in a fuel tank is filtered through a fuel filter, and the altered fuel is injected from an injector into an engine combustion chamber, and is burned in the combustion chamber.

### SUMMARY OF THE INVENTION

The fuel contains foreign substances, such as solid contaminants, including moisture, dust, rust, etc. The moisture in fuel, in particular, resides in appliances, such as a fuel pump, etc., gives rise to drawbacks, such as rust development and the like. Therefore, a fuel filter is used.

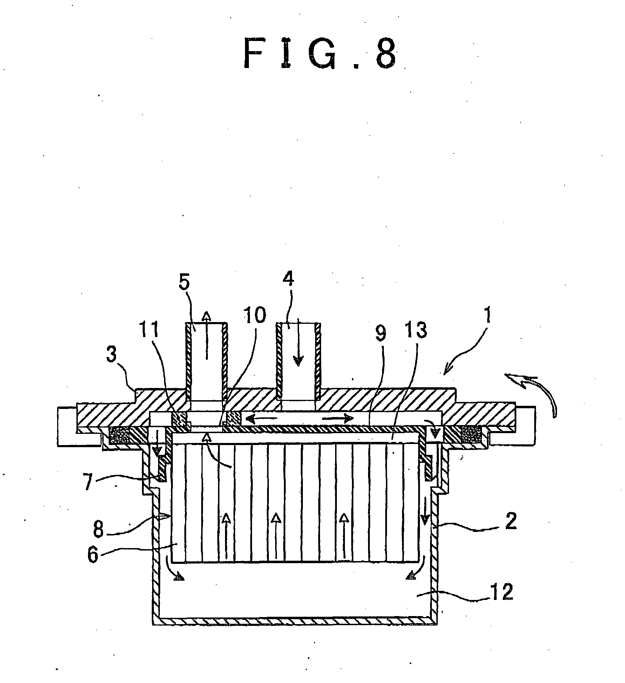

FIG. 8 shows a fuel filter. The fuel filter 1 is made up of a cup-shape case 2 that forms an outer shell, and a cap 3 detachably attached to an upper opening end of the case 2. A fuel inlet pipe 4 and a fuel outlet pipe 5 are attached to the cap 3.

The case 2 contains a filtration member 8 that is made up of a scroll-shape filter medium 6, and a filter medium-holding member 7 that holds an upper end portion of the filter medium 6. Besides, an upper surface portion 9 of the filter medium-holding member 7 is provided with a fuel discharge passage hole 10 that communicates with a fuel outlet pipe 5. The filtration member 8, when housed within the case 2, surrounds the fuel discharge passage hole 10.' An annular seal member 11 is attached in a clamped fashion between a bottom surface of the cap 3 and an upper surface of the filter medium-holding member 7. A water sump chamber 12 is formed below the filtration member 8.

The fuel containing foreign substances that is introduced through a fuel inlet pipe 4 as shown by solid arrows is supplied to an upper surface of the upper surface portion 9 of the filter medium-holding member 7, and spreads horizontally along the upper surface, and is introduced into the water sump chamber 12 below the case 2 through a passageway between an inner peripheral surface of the case 2 and an outer peripheral surface of the filtration member 8. In the water sump chamber 12, the fuel changes its direction by 180° to flow upward to be filtered through the filter medium 6. Then, the fuel, flowing out through the fuel discharge passage hole 10 and then through the fuel outlet pipe 5 as shown by hollow arrows, is sent to the engine (US application No. 11/583,780).

Incidentally, the fuel in a fuel path contains air mixed therein although in a small amount. As long as the air remains mixed in fuel, or if some of the air temporarily separates but remixes, within a short time, into fuel, the air-containing fuel sent to the engine does not cause combustion trouble. However, if a closed space where fuel does not flow is formed and remains in the fuel path for a longtime, for example, when the motor vehicle or the like is tilted, or the like, it is conceivable that separated air accumulates in large amount in the closed space. If a closed space is formed and, in the closed space, separated air accumulates in large amount, the accumulated air will likely be discharged from the filter all at once and be sent to the engine when the motor vehicle or the like returns from the tilted posture or the like to a normal state, Then, there arises a possibility of engine trouble.

In the filter 1 shown in FIG. 8, a space 13 is provided between an upper surface of the filter medium 6 and a bottom surface of the horizontal upper surface portion 9 of the filter medium-holding member 7. The filter medium 6, if of a scroll shape, essentially requires that a space for fuel to flow through be provided at a location immediately downstream of the exit side of the filter medium 6. Therefore, the fuel filtered through the filter medium 6 strikes the bottom surface of the upper surface portion 9 of the filter medium-holding member 7. In this event or another, a portion of the air contained in the fuel separates from the fuel. During an ordinary operation of the motor vehicle or the like, however, a closed space is not formed in the space 13, and therefore the separated air is discharged together with fuel and mixes again into fuel, thus causing no particular problem.

On the other hand, for example, in the case where the motor vehicle or the like is tilted so that the filter 1 is tilted counterclockwise as shown by a hollow arrow in FIG. 8 and where the tilted state continues for a long time, a closed space is formed in the space 13, and air accumulates in large amount in the closed space. Then, when the motor vehicle or the like returns to a normal state, there is a possibility of the accumulated air being discharged and sent to the engine all at once and then causing engine trouble.

The next-coming prior art document FR 2733 009 discloses a filter medium which is disposed in a casing with a lid on the top of which inclined surfaces are formed which goes to the centre of the lid in the upward direction. Gas and air which have traversed the filter element are temporary collected between the lid and the filter element. The gas and the air which have collected there are transferred to the exit via a nozzle in form of small and regular bubbles. A tube is formed at the exit which ends much lower than the upper surface of the lid so that the liquid with the air has to pass downwardly and the upwardly within the tube in order to reach the exit.

In document WO 00/36390, a device for the continuous further transport of air in a fuel system is disclosed. The final fuel discharge opening is formed at the bottom in form of an outlet orifice which is disposed at the end of a duct which leads to the upper end in the middle of the cove. Due to the small diameter of the duct the flow velocity of the fuel is increased on entering the duct.

The drawbacks of the prior art are improved by the subject matter of the present invention as defined in claim 1 and in the subclaims.

In the following, a first aspect in relation to the background of the present invention is described.

In document US 5 895 574, a mounting element of a filter apparatus is provided which has an annular center divider segment on which an end cap is mounted via a gasket. A lower part of the annular center divider segment protrudes in such a manner that a closed space with air if the filter apparatus is used for a fuel filter might occur.

A first aspect is a fuel filter including: a case; and a filter medium disposed in the case, the fuel filter being characterized by including a fuel discharge guidance member that forms a space between the filter medium and a fuel discharge opening for discharging a fuel filtered by the filter medium to outside the fuel filter, and that has inside the space a sloped surface in which the fuel discharge opening is disposed at a highest position and which is sloped downward from the fuel discharge opening.

A fuel filter based on the first aspect further includes a cap that closes an upper open portion of the case and that has a fuel outlet opening, wherein: the fuel discharge guidance member includes a filter medium-holding member that holds an upper portion of the filter medium; the fuel discharge opening includes a fuel discharge passage hole provided in an upper surface portion of the filter medium-holding member, and guides the fuel filtered by the filter medium to the fuel outlet opening; and the fuel discharge passage hole is at the highest position in the upper surface portion of the filter medium-holding member, and the upper surface portion is sloped downward from the fuel discharge passage hole. Due to the construction as described above, even if the motor vehicle or the like is tilted for a long time, a closed space is not formed between the filter medium and the upper surface portion of the filter medium-holding member, and therefore air does not reside but flows toward the engine.

A fuel filter based on the first aspect has a construction in which: the fuel discharge guidance member includes a cap that closes the upper open portion of the case; the fuel discharge opening includes a fuel outlet opening provided in the cap; and the filter medium is held by the cap, and the fuel outlet opening is at the highest position in a bottom surface of the cap that faces an upper surface of the filter medium, and the bottom surface of the cap is sloped downward from the fuel outlet opening. Due to this construction, even if the motor vehicle or the like is tilted, a closed space is not formed between the filter medium and the bottom surface of the cap, and therefore air does not reside but flows toward the engine.

In a fuel filter based on the first aspect, the fuel outlet opening is provided at a center of the cap. This construction eliminates the need for the provision of positioning means for use at the time of attachment of the case and the cap to each other.

### BRIEF DESCRIPTION OF THE DRAWINGS

The foregoing and further objects, features and advantages of the invention will become apparent from the following description of embodiment embodiments with reference to the accompanying drawings, wherein like numerals are used to represent like elements and wherein:
FIG. 1 is a sectional view of a fuel filter of a first embodiment of the invention;
FIG. 2 is a sectional view taken on a line 2A-2A of FIG 1;
FIG. 3 is a sectional view of various disassembled component parts of the fuel filter of the first embodiment of the invention;
FIG. 4 is a sectional view of a fuel filter of a second embodiment of the invention;
FIG. 5 is a sectional view of a fuel filter of a third embodiment of the invention;
FIG. 6 is a sectional view of a fuel filter of a modification of the third embodiment;
FIG 7 is a sectional view of a fuel filter of a fourth embodiment of the invention; and
FIG. 8 is a sectional view of a fuel filter.

### DETAILED DESCRIPTION OF EMBODIMENTS

### [EMBODIMENT 1]

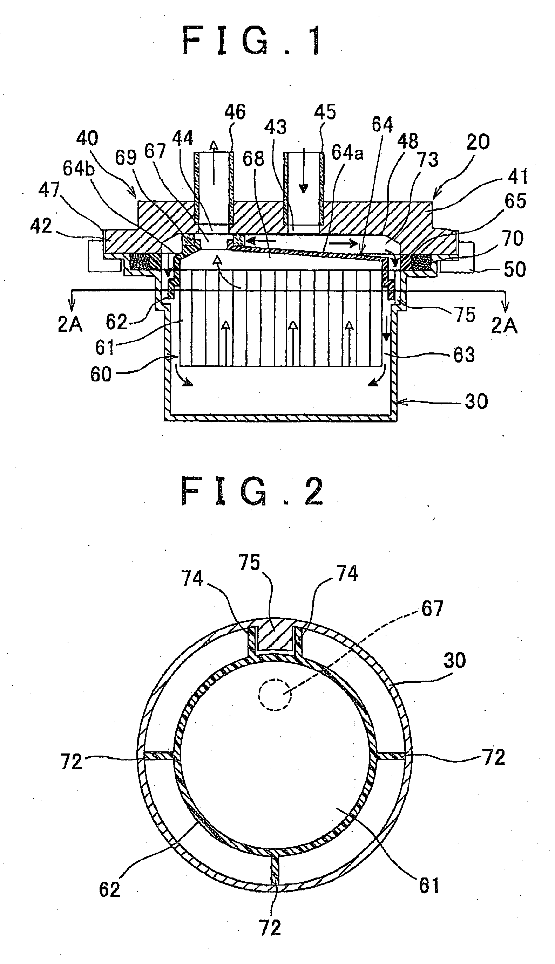

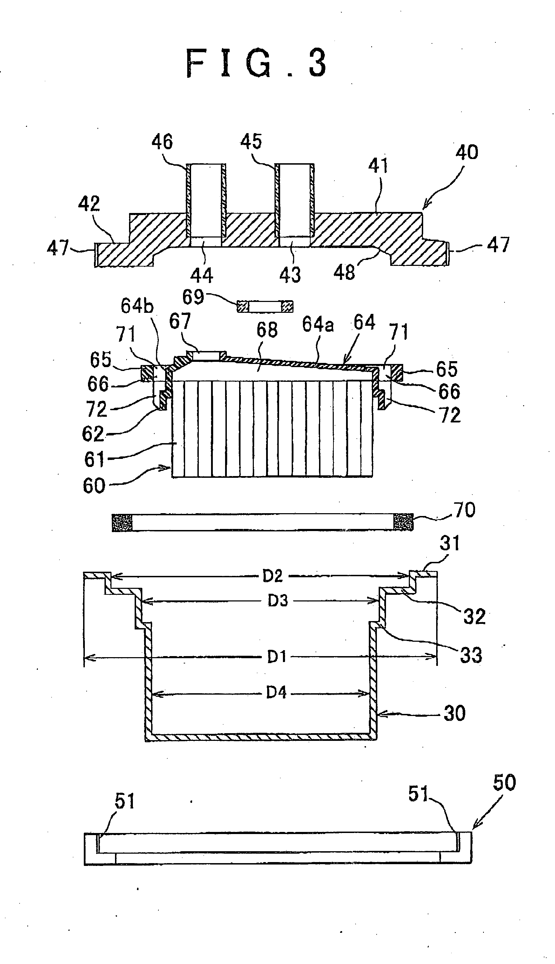

FIG. 1 shows a sectional view of a fuel filter. FIG. 2 shows a sectional view taken on the line 2A-2A of FIG. 1. FIG. 3 shows a sectional view of various members of the fuel filter before assembly. The fuel filter of the invention may be applied to any use, for example, motor vehicles, construction machines, forklifts, electric power generators, etc. However, the filter of the invention will be described below in conjunction with a filter for use in a fuel system of a motor vehicle.

A fuel filter 20 is made up of a cup-shape case 30 that forms an outer shell, a filtration member 60 housed in the case 30, a cap 40 that closes, like a lid, an upward open portion of the ease 30, a fastening member 50 that integrally combines the case 30 and the cap 40 with each other, etc.

The case 30 is a metal-made hollow cylindrical tubular member with an upward opening. As shown in FIG. 3, an upper end portion of the case 30 is provided with an outwardly protruded horizontal ring-shape upper step portion 31 having a diameter D1, and a horizontal ring-shape intermediate step portion 32 having a diameter D2 is formed below the upper step portion 31, and a horizontal ring-shape lower step portion 33 having a diameter D3 is formed below the intermediate step portion 32.

Since the case 30 is made of metal, the impact resistance of the case heightens allowing the case 30 to be disposed at, for example, a position that is on a bottom portion of a motor vehicle and that may well be hit by a stone thrown up by a tire. In the case where there is secured an installation location that does not require high impact resistance of the case 30, the case 30 may be made of resin instead of metal.

The cap 40 is a metal-made circular member, and is made up of a circular body portion 41 and an outer peripheral flange portion 42. The body portion 41 is provided with a fuel inlet opening 43 penetrating vertically through, a substantially central portion of the body portion 41, and is also provided with a fuel outlet opening 44 penetrating vertically through the body portion 41 at a position eccentric to the center of the body portion 41. A fuel inlet pipe 45 and a fuel outlet pipe 46 are fitted into the fuel inlet opening 43 and the fuel outlet opening 44, respectively. Via the fuel inlet pipe 45, fuel is supplied from a fuel tank (not shown). After being filtered, fuel is discharged through the fuel outlet pipe 46 toward an engine (not shown).

The diameter of the flange portion 42 is substantially the same as the diameter D1 of the upper stop portion 31 of the case 30. An outer peripheral surface of the flange portion 42 is provided with a male thread 47 to which the fastening member 50 can be screwed. A bottom portion of the flange portion 42 is provided with a receded fitting portion 48 whose diameter is the same as the diameter D3 of the lower step portion 33 of the case 30. The receded fitting portion 48 partially defines a space that is formed over an upper surface of the filtration member 60 when the filtration member 60 is inserted in the case 30.

The fastening member 50 is a metal or resin-made member having an "L" shape in section. An inner surface of the fastening member 50 is provided with a female thread 51. To close the upper open portion of the case 30 with the cap 40, the bottom portion of the flange portion 42 of the cap 40 is firstly placed on an upper surface of the upper stop portion 31 of the case 30. Next, the fastening member 50 is inserted from below the case 30, and the female thread 51 of the fastening member 50 is screwed to the male thread 47 of the flange portion 42 until a bottom horizontal surface of the fastening member 50 contacts a bottom surface of the upper step portion 31. Thus, the case 30 and the cap 40 are integrally fixed to each other.

The filtration member 60 is made up of a filter medium 61 and a filter medium-holding member 62. The filter medium 61 is a cylindrical member formed by winding up a laminate of a flat filter medium and a wavy filter medium into a scroll shape, and is disposed so that the fuel passageways thereof extend in a vertical or up-down direction. When fuel is caused to flow through the multiple passages formed within the filter medium 61, the filter medium 61 traps foreign substances contained in the fuel. An outside diameter of the filter medium 61 is smaller than an inside diameter D4 of the case 30. Therefore, when the filter medium 61 housed in the case 30, a fuel passageway 63 is formed between the inner peripheral surface of the case 30 and the outer peripheral surface of the filter medium 61.

The filter medium-bolding member 62 is a resin-made member that is formed integrally as a single member, and is made up of a body portion 64, a brim portion 65, and a link portion 66. The body portion 64 is a downwardly open umbrella-shape member having the shape of an inverted shallow container, and has an upper surface portion 64a, and a holding portion 64b. The upper surface portion 64a has a configuration in which a fuel discharge passage hole 67 is formed at a position that faces the fuel outlet opening 44 of the cap 40, and in which the fuel discharge passage hole 67 is placed at the highest position and the upper surface portion 64a is sloped from the fuel discharge passage hole 67 toward the outwardly located holding portion 64b.

The holding portion 64b is a tubular portion that extends downward from an outer peripheral end of the upper surface portion 64a. An Inside diameter of the holding portion 64b is substantially the same as the outside diameter of the filter medium 61, and the inner peripheral surface of the holding portion 64b liquid-tightly holds an upper outer peripheral end of the filter medium 61 via an adhesive or the like. When the holding portion 64b and the filter medium 61 are integrally joined, an upper space 68 is formed between the upper surface of the filter medium 61 and the upper surface portion 64a.

When the open potion of the case 30 is to be closed with the cap 40, the fuel discharge passage hole 67 provided in the upper surface portion 64a of the body portion 64 is located so as to face the fuel outlet opening 44 of the cap 40, and a ring-shape first seal member 69 is provided on an outer peripheral portion of the fuel discharge passage hole 67, and the first seal member 69 is clamped between the bottom surface of the cap 40 and the upper surface portion 64a of the filter medium-holding member 62. In this manner, the inflow fuel that has not been filtered is restrained from leaking to the outflow side.

The brim portion 65 is a ring-shape portion, and an outside diameter thereof is smaller than the inside diameter D2 of the intermediate step portion 32 of the case 30, and inside diameter of the brim portion 65 is substantially the same as the inside diameter D3 of the lower step portion 33 of the case 30. A bottom potion of the brim portion 65 is placed on an upper surface of the intermediate step portion 32. When the open portion of the case 30 is to be closed with the cap 40, a ring-shape second seal member 70 having an outside diameter slightly smaller than the inside diameter D2 of the intermediate step portion 32 is placed on the intermediate step portion 32 of the case 30. Next, the brim portion 65 is placed on the intermediate step portion 32 inside the second seal member 70. Then, by fastening them with the fastening member 50, the second seal member 70 is liquid-tightly clamped between the bottom surface of the cap 40 and the upper surface of the intermediate step portion 32. Incidentally, the order of placing the second seal member 70 and the brim portion 65 may be reversed.

The link portion 66 is a member that links the upper outer peripheral surface of the holding portion 64b and the inner peripheral surface of the brim portion 65. In this embodiment, six link portions 66 are provided radially and equidistantly. Between the link portions 66, six arc-shape cutout portions 71 that are substantially the same in shape are provided equidistantly. Via the cutout portions 7 1, fuel flows from above down to the fuel passageway 63.

Six ribs 72 substantially the same in shape as the link portions 66 are radially provided under the link portions 66. The outside diameter that these two ribs 72 face are slightly smaller than the inside diameter D3 of the lower step portion 33 of the case 30. As the filtration member 60 is housed into the case 30, the ribs 72 move along the inner peripheral surface of a portion adjacent to the lower step portion 33 of the case 30 and thus guide the filtration member 60. After the filtration member 60 is housed, the ribs 72 make the ewer axes of the filter medium 61 and the case 30 coincide with each other, and also make the center axes of the fuel outlet opening 44 and the fuel discharge passage hole 67 coincide with each other

After the filtration member 60 have been housed in the case 30, an upper chamber 73 is fenced between the upper surface of the filter medium-holding member 62 and a bottom surface of the receded fitting portion 48 of the cap 40. Besides, the fuel passageway 63 is formed between the inner mace of a portion of the case 30 that has the diameter D4 and the outer peripheral surface of the filter medium 61. The fuel supplied into the upper chamber 73 flows down through the cutout portions 71 formed between me holding portion 64b and the brim portion 65 and then through the fuel passageway 63.

In the first embodiment, the fuel outlet opening 44 is provided at a position that is eccentric to the center of the fuel filter. Therefore, in order to position the fuel outlet opening 44 and the fuel discharge passage hole 67 so as to face each other, it is necessary to perform the positioning when the filtration member 60 is housed in the case 30, and also to perform the positioning when the cap 40 is attached to the case 30.

FIG. 2 shows an example of positioning means used when the filtration member 60 is housed into the case 30. In the position means, two positioning protrusions 74 with a small interval therebetween are provided on the outer periphery of the holding portion 64b of the filter medium-holding member 62 that has a plurality of ribs 72. Furthermore, a swelled-out portion 75 is provided on the inner peripheral surface of the case 30 so as to be insertable between the two positioning protrusions 74. Therefore, the filtration member 60 and the case 30 are attached to each other by inserting the swelled-out portion 75 into the space between the two positioning protrusions 74. The positioning means used when the cap 40 is attached to the case 30 may be, for example, as follows, That is, the two members are attached to each other by aligning a marking provided on the cap 40 with a marking provided on the case 30. In any case, the case 30 and the cap 40 need to be attached by using the foregoing positioning means, in order to position the fuel outlet opening 44 and The fuel discharge passage hole 67 so as to face each other.

The flow of fuel or the like will be described. The fuel introduced through the fuel inlet pipe 45 as shows by the solid arrow in FIG. 1 News through the fuel inlet opening 43 to the upper chamber 73, and spreads in all 360-degree directions in the upper chamber 73. Then, as shown by solid snows, the fuel flows down through the cutout portions 71 and then through the fuel passageway 63 between the inner peripheral surface of the case 30 and the outer peripheral surface of the filter medium 61. After that, the fuel moves upward as shown by the hollow arrows, and passes through the filter medium 61, so that foreign substances contained in the fuel are removed.

The fuel from which foreign substances have been removed by the filter medium 61 reaches the upper space 68 above the filter medium 61, and is discharged via the fuel discharge passage hole 67, the fact outlet opening 44 and the fuel outlet pipe 46 as shown by the hollow arrows. Incidentally, the fuel having reached the upper space 68 above the filter medium 61 impinges upon the upper surface portion 64a, so that a portion of the air contained in the fuel may sometimes separate. However, since the upper surface portion 64a is sloped upward toward the fuel discharge passage hole 67, the separated air New together with the fuel into the fuel discharge passage hole 67, and remixes into the fuel. Even if the separated air reaches the engine, the air does not cause engine trouble since the amount of the air is small. That is, since the upper surface portion 64a is sloped upward toward the fuel discharge passage hole 67, a closed space is unlikely to form above the filter-medium 61 even when the motor vehicle or the like is tilted. Thus, this construction restrains a drawback that separated air accumulates in large amount and the accumulated air flows into the engine all at once and causes engine trouble or the like.

In other words, in the first embodiment, the upper surface portion of the filter medium-holding member has a construction in which the fuel discharge passage hole is at the highest portion and the upper surface portion is sloped downward from the fuel discharge passage hole. This construction restrains a drawback that a large amount of air resides in the fuel filter and the air flows into the engine all at once and causes engine trouble.

### [EMBODIMENT 2]

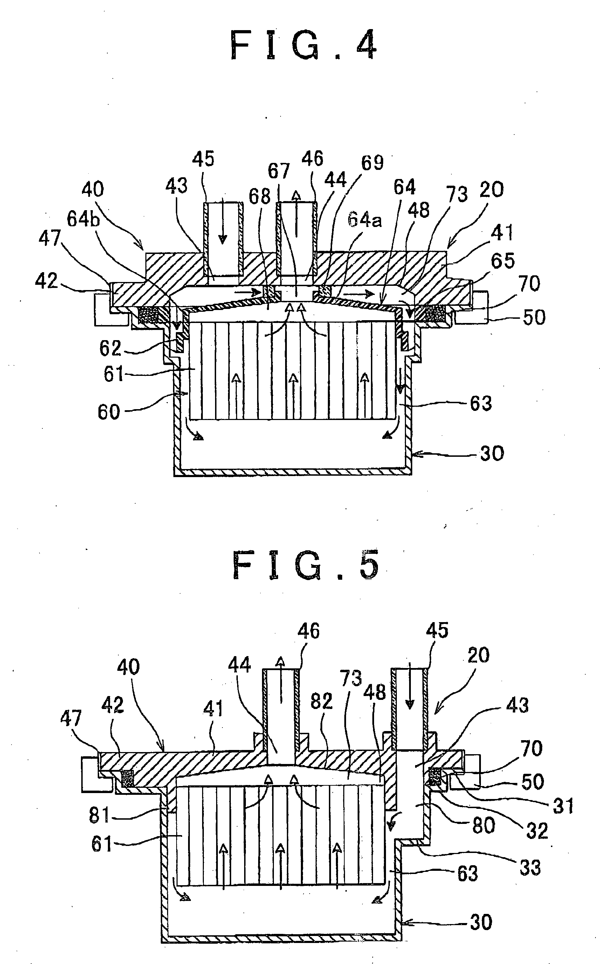

FIG. 4 is a sectional view showing a second embodiment of the fuel filter of the invention. Embodiment 2 is different from Embodiment 1 in that the fuel outlet opening 44 provided in the cup 40 and the fuel discharge passage hole 67 provided in the filter medium-holding member 62 are provided on a center axis of the cap 40. Incidentally, of Embodiment 2 comparable to those of Embodiment 1 are represented by the same reference characters, and the cap 40 and the filtration member 60, which are changed in construction from those in Embodiment 1, will be mainly described, while the description of other component members and the like, such as the cast 30 and the like, will be omitted.

The cap 40 is a metal-made circular member, and is made up of a circular body portion 41 and an outer peripheral flange portion 42. The body portion 41 is provided with a fuel inlet opening 43 penetrating vertically through the body portion 41 at a position eccentric to a center of the body portion 41, and is also provided with a vertically penetrating fuel outlet opening 44 at the center of the body portion 41. A fuel inlet pipe 45 and a fuel outlet pipe 46 are fitted into the fuel inlet opening 43 and the fuel outlet opening 44, respectively. Via the fuel inlet pipe 45, fuel is supplied from a fuel tank (not shown). After being filtered, fuel is discharged via the fuel outlet pipe 46 toward an engine (not shown). Incidentally, the flange portion 42 is the same as that in Embodiment 1.

The filtration member 60 is made up of a filter medium 61 and a filter medium-holding member 62. The filter medium 61 is formed by winding up a laminate of a flat filter medium and a wavy filter medium into a scroll shape, and is the same as in Embodiment 1.

The filter medium-holding member 62 is a resin-made member that is formed integrally as a single member, and is made up of a body portion 64, a brim portion 63, and a link portion 66. The body portion 64 is a downwardly open umbrella-shape member having the shape of an inverted shallow container, and has in upper surface portion 64a, and a holding portion 64b. The upper surface portion 64a is provided with a fuel discharge passage hole 67 at a position that faces the fuel outlet opening 44 of the cap 40, that is, at the center of the body portion 64. The upper surface portion 64a has a symmetrical configuration in which the fuel discharge passage hole 67 is placed at the highest position and the upper surface portion 64a is sloped from the fuel discharge passage hole 67 toward the outwardly located holding portion 64b. Incidentally, the holding portion 64b, the brim portion 65, the first seal member 69 and the second seal member 70 are the same as in Embodiment 1.

In the second embodiment, since the fuel outlet opening 44 and the fuel discharge passage hole 67 are both provided on the center axis, positioning means is not necessary when the filtration member 60 is housed into the case 30 or when the cap 40 is attached to the case 30. This correspondingly facilitates the assembly of the fuel filter, and reduces the production cost. Incidentally, although in conjunction with the second embodiment, the case 30, the cap 40 and the filtration member 60 have been described as being circular in shape, the shapes of the component members may be, for example, of an equilateral polygon, an ellipse, and the like.

In other words, in the second embodiment, since the fuel outlet opening is provided at the center of the cap, the need for the provision of positioning means at the time of attaching the case and the cap to each other can be eliminated, and the productivity can be correspondingly heightened. That is, in a fuel filter in which the fuel outlet opening is not provided on the center of the cap, some positioning means is needed in order to cause a fuel outlet opening to face the fuel discharge passage hole when the cap is attached to the case. In the second embodiment, however, since the fuel outlet opening is provided at the center of the cap, the fuel discharge passage hole naturally faces the fuel outlet opening when the cap is attached to the case, and therefore positioning means is not needed. Thus, the productivity can be correspondingly heightened.

In the second embodiment, too, the upper surface portion 64a is sloped upward toward the fuel discharge passage hole 67. Therefore, even if the motor vehicle or the like is tilted, a closed space is unlikely to form above the filter medium. Hence, this construction restrains the drawback that separated air accumulates in large amount and the accumulated air flows into the engine all at once and causes engine trouble. At the same time, the positioning means for use when various members are attached becomes unnecessary as mentioned above.

### [EMBODIMENT 3]

FIGS. 5 is a sectional view showing a third embodiment of the fuel filter of the invention. Embodiment 3 is different from Embodiment 1 and Embodiment 2 in that the filter medium-holding member 61 is eliminated and a sloped surface corresponding to the sloped surface prodded on the filter medium-holding member 62 is provided directly on a bottom portion of the cap 40. Incidentally, portions comparable to those in Embodiment 1 are represented by the same reference characters, and detailed description of some will be omitted.

The case 30 is a metal-made hollow cylindrical tubular member with an upward opening. As in Embodiment 1, the case 30 has an upper step portion 31, an intermediate step portion 32 and a lower step portion 33. In the lower step portion 33, a portion of the side portion is made radially wider so as to form an inlet passage hole 80 through which fuel flows into the fuel passageway 63.

The filter medium 61 is formed by winding up a flat fillet medium and a wavy filter medium into a scroll shape, and is the same as in Embodiment 1. Incidentally, the filter medium 61 is directly held on the cap 40, without using the filter medium-holding member 62 as in Embodiment 1.

The cap 40 is a metal-made circular member, and is made up of a circular body portion 41, an outer peripheral flange pardon 42, and a tubular portion 81 extending downward from the body portion 41. The body portion 41 is provided with a fuel inlet opening 43 vertically penetrating through the body portion 41 at a position eccentric to the center of the body portion 41, and is also provided with a vertically penetrating fuel outlet opening 44 at the center of the body portio 41. A fuel inlet pipe 45 and fuel outlet pipe 46 are fitted into the fuel inlet opening 43 and the fuel outlet opening 44, respectively. Via the fuel inlet pipe 45, fuel is supplied from a fuel tank (not shown). After being filtered, fuel is discharged via the fuel outlet pipe 46.

The fuel inlet opening 43 is linked in communication with the inlet passage hole 80 formed at a side portion of the case 30. The met introduced through the fuel inlet opening 43 flows down through the inlet passage hole 80 and then through the fuel passageway 63 between the case 30 and the filter medium 61.

The diameter of the flange portion 42 is substantially the same as the diameter D1 of the upper step portion 31 of the case 30. An outer peripheral surface of the flange portion 42 is provided with a male thread 47 to which a fastening member 50 can be screwed. The tubular portion 81 provided under the body portion 41 holds the filter medium 61 on an inner peripheral surface of the tubular portion 81. This holding manner eliminates the need for the filter medium-holding member 62. In a bottom surface of the body portion 41, the fuel outlet opening 44 is disposed at the highest position, and a sloped surface 82 is sloped downward and symmetrically from the fuel outlet opening 44. In addition, an upper chamber 73 is formed between the sloped surface 82 and the upper surface of the filter medium 61. Incidentally, the fastening member 50 is the same as in Embodiment 1.

When the open portion of the case 30 is to be closed with the cap 40, a ring-shape second seal member 70 having an outside diameter slightly smaller than the inside diameter D2 of the intermediate step portion 32 is placed on the intermediate step portion 32 of the case 30. Then, by fastening them with the fastening member 50, the second seat member 70 is liquid-tightly clamped between the bottom surface of the cap 40 and the upper surface of the intermediate step portion 32.

The flow of fuel or the like will be described. The fuel introduced through the fuel inlet pipe 45 as shown by a solid arrow in FIG. 5 flows through the fuel inlet opening 43 to the inlet passage hole 80. Then, the fuel flows down through the fuel passageway 63 between the inner peripheral surface of the case 30 and the outer peripheral surface of the filter medium 61. After that, the fuel moves upward as shown by hollow arrows, and passes through the filter medium 61, so that foreign substances contained in the fuel are removed.

In the third embodiment, the bottom portion of the cap 40 is provided with the sloped surface 82 that is sloped upward toward the fuel outlet opening 44. Therefore, a closed space is unlikely to form above the filter medium even when the motor vehicle or the like is tilted. Thus, this construction restrains the drawback that separated air accumulates in large amount and the accumulated air flows into the engine all at once and causes engine trouble or the like.

In other words, the third embodiment has a construction in which the filter medium formed in a scroll shape is held by the cap, and in which the bottom surface of the cap facing the upper surface of the filter medium is sloped downward from the fuel outlet opening placed at the highest position. This construction restrains the drawback that a large amount of air resides in the fuel filter and the air flows into the engine all at once and causes engine trouble.

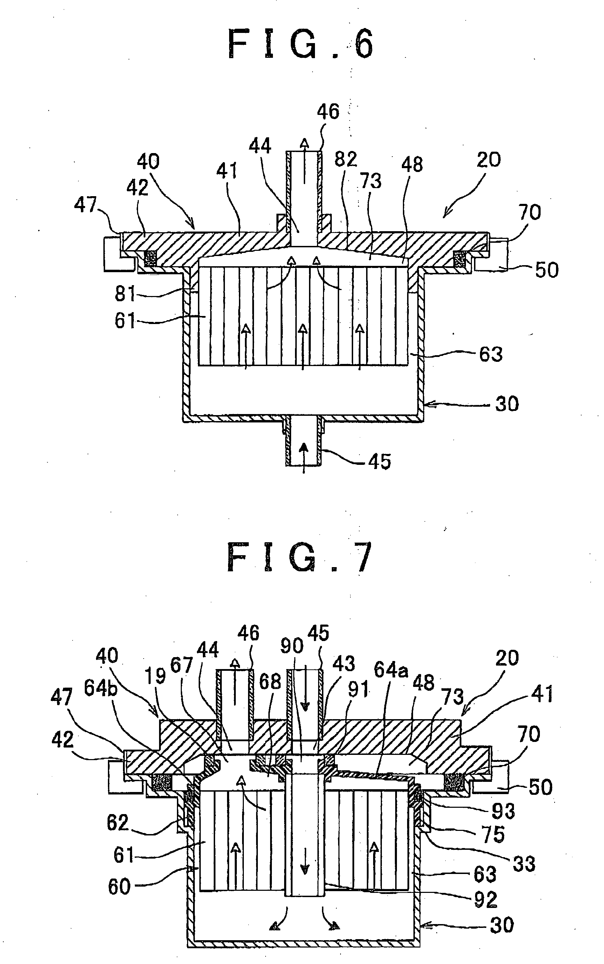

FIG. 6 shows a modification of the third embodiment shown in FIG. 5. In this modification, the fuel inlet opening 43 is provided in the bottom surface of the case 30. This configuration heightens the degree of freedom in the attachment of the fuel inlet opening 43, and facilitates the attachment thereof.

### [EMBODIMENT 4]

FIG. 7 is a sectional view showing a fourth embodiment of the fuel filter of the invention. Embodiment 4 is different from Embodiment 1 in that the fuel filter in Embodiment 1 is of a side flow type in which fuel flows in between a case's inner peripheral surface and an outer peripheral surface of the filtration member, whereas the fuel filter in Embodiment 4 is of a center flow type in which fuel flows in through a cental portion of the filtration member. Incidentally, portions comparable to those in Embodiment 1 are represented by the same reference characters, and the filtration member and the like changed in construction will be mainly described, and the description of other members and the like will be omitted.

The cap 40 is the same as in Embodiment 1. A body portion 41 is provided with a fuel inlet opening 43 penetrating vertically through a central portion of the body portion 41, and is also provided with a fuel outlet opening 44 penetrating vertically through the body portion 41 at a position eccentric to the center of the body portion 41. A fuel inlet pipe 45 and a fuel outlet pipe 46 are fitted into the fuel inlet opening 43 and the fuel outlet opening 44, respectively.

The filtration member 60 is made up of a filter medium 61 and a filter medium-holding member 62. The filter medium 61 is formed by winding up a laminate of a flat filter medium and a wavy filter medium into a scroll shape. A central portion of the filter medium 61 is provided with a fuel inlet pipe 92 penetrating vertically through the filter medium 61.

The filter median-holding member 62 is a resin-made member that is formed integrally as a single member, end is made up of an upper surface portion 64a and a holding portion 64b. The upper surface portion 64a has a on in which a fuel discharge passage hole 67 is formed at a position that faces the fuel outlet opening 44 of the cap 40, and in which the fuel discharge passage hole 67 is placed at the highest position and the upper surface portion 64a is sloped downward from the fuel discharge passage hole 67 toward the located holding portion 64b. in addition, an upper surface of the upper surface portion 64a is provided with a first seal member 69 surrounding the fuel discharge passage hole 67. Incidentally, when the cap 40 is attached to the case 30, a second seal member 70 that is the same as in Embodiment 1 is attached at the same position as in Embodiment 1.

Furthermore, the central portion of the upper surface portion 64a is provided with a fuel inlet passage hole 90. Furthermore, an upper surface around the fuel inlet passage hole 90 is provided with a third seal member 91 surrounding the fuel inlet passage hole 90. An upper and portion of the fuel inlet pipe 92 penetrating vertically through the center of the filter medium 61 is attached to a lower surface around the fuel inlet passage hole 90.

The holding portion 64b is a tubular portion extending downward from an outer peripheral end of the upper surface portion 64a. The holding portion 64b holds an upper outer peripheral surface of the filter medium 61 on an inner peripheral surface of the holding portion 64b, via an adhesive or the like. Furthermore, a fourth seal member 93 is attached to an outer peripheral surface of the holding portion 64b. When the filtration member 60 is housed in the case 30, the fourth seal member 93 contacts the inner peripheral surface of the case 30. When the filtration member 60 is housed in the case 30, a lower end portion of the holding portion 64b contacts an upper surface of a lower step portion 33 of the mn 30. Thus, the filter medium-holding member 62 is supported by the lower step portion 33.

The flow of fuel or the like will be described. The fuel introduced through the fuel inlet pipe 45 as shown by a solid arrow in FIG. 7 flows through the fuel inlet opening 43 to the fuel inlet passage hole 90. Then, as shown by solid arrows, the fuel flows down via the fuel inlet pipe 92. After that, the fuel moves upward as shown by hollow arrows, and passes through the filter medium 61, so that foreign substances contained in the fuel are removed. The fact from which foreign substances have been removed reaches the upper space 68 above the filter medium 61, and is discharged via the fuel discharge passage hole 67, the fuel outlet opening 44 and the fuel outlet pipe 46 as shown by hollow arrows.

in this embodiment, too, since the upper surface portion 64a is sloped upward toward the fuel discharge passage hole 67, a closed space is unlikely to form above the filter medium even when the motor vehicle or the like is tilted. Thus, this construction restrains the drawback that separated air accumulates in large amount and the accumulated air flows into the engine all at once and causes engine trouble.

## Claims

1. A fuel filter (20) including: a case (30); and a filter medium (61) disposed in the case (30), comprising:
a fuel discharge guidance member that forms a space between the filter medium (61) and a fuel discharge opening for discharging a fuel filtered by the filter medium (61) to outside the fuel filter (20),
**characterized in that** the fuel discharge guidance member has inside the space a sloped surface in which the fuel discharge opening is disposed at a highest position and which is sloped downward from the fuel discharge opening, and
a) wherein the fuel filter (20) comprises a cap (40) that closes an upper open portion of the case (30) and that has a fuel outlet opening (44), wherein: the fuel discharge guidance member comprises a filter medium-holding member (62) that holds an upper portion of the filter medium (61);
the fuel discharge opening comprises a fuel discharge passage hole (67) provided in an upper surface portion (64a) of the filter medium-holding member (62), and guides the fuel filtered by the filter medium (61) to the fuel outlet opening (44); and
the fuel discharge passage hole (67) is at the highest position in the upper surface portion (64a) of the filter medium-holding member (62), and the upper surface portion (64a) is sloped downward from the fuel discharge passage hole (67), or
b) wherein the fuel discharge guidance member comprises a cap (40) that closes the upper open portion of the case (30);
the fuel discharge opening comprises a fuel outlet opening (44) provided in the cap (40); and the filter medium (61) is held by the cap (40), and
the fuel outlet opening (44) is at the highest position in a bottom surface of the cap (40) that faces an upper surface of the filter medium (61), and
the bottom surface of the cap (40) is sloped downward from the fuel outlet opening (44).

2. The fuel filter (20) according to claim 1, wherein the fuel outlet opening (44) is provided at a center of the cap (40).

3. The fuel filter (20) according to claim 2, wherein the fuel discharge passage hole (67) is provided at a position that faces the fuel outlet opening (44).

4. The fuel filter (20) according to any one of claims 1 to 3, wherein the fuel discharge guidance member is made up only of the sloped surface.

5. The fuel filter (20) according to any one of claims 1 to 4, wherein a bottom portion of the case (30) is provided with a fuel inlet opening (43).

## Patentansprüche

1. Kraftstofffilter (20) beinhaltend: ein Gehäuse (30); und ein im Gehäuse (30) angeordnetes Filtermedium (61), der aufweist:
ein Kraftstoffausstoßleitelement, das einen Raum zwischen dem Filtermedium (61) und einer Kraftstoffausstoßöffnung für ein Ausstoßen eines durch das Filtermedium (61) gefilterten Kraftstoffs aus dem Kraftstofffilter (20) formt,
**dadurch gekennzeichnet, dass** das Kraftstoffausstoßleitelement im Inneren des Raumes eine geneigte Oberfläche hat, in der die Kraftstoffausstoßöffnung an einer obersten Stelle angeordnet ist und die von der Kraftstoffausstoßöffnung nach unten abfällt, , und
a) wobei der Kraftstofffilter (20) eine Kappe (40) aufweist, die einen oberen offenen Abschnitt des Gehäuses (30) schließt und die eine Kraftstoffausgangsöffnung (44) hat, wobei:
das Kraftstoffausstoßleitelement ein Filtermedium-Aufnahmeelement (62) aufweist, das einen oberen Abschnitt des Filtermediums (61) aufnimmt;
die Kraftstoffausstoßöffnung eine Kraftstoffausstoßdurchgangsöffnung (67) aufweist, die in einem oberen Oberflächenabschnitt (64a) des Filtermedium-Aufnahmeelements (62) bereitgestellt ist, und den durch das Filtermedium (61) gefilterten Kraftstoff zur Kraftstoffausgangsöffnung (44) leitet; und
sich die Kraftstoffausstoßdurchgangsöffnung (67) an der obersten Stelle im oberen Oberflächenabschnitt (64a) des Filtermedium-Aufnahmeelements (62) befindet, und der obere Oberflächenabschnitt (64a) von der Kraftstoffausstoßdurchgangsöffnung (67) abwärts geneigt ist, oder
b) wobei das Kraftstoffausstoßleitelement eine Kappe (40) aufweist, die den oberen offenen Abschnitt des Gehäuses (30) schließt;
die Kraftstoffausstoßöffnung eine in der Kappe (40) bereitgestellte Kraftstoffausgangsöffnung (44) aufweist; und das Filtermedium (61) durch die Kappe (40) gehalten wird, und
sich die Kraftstoffausgangsöffnung (44) an der obersten Stelle in einer unteren Oberfläche des Kappe (40), die einer oberen Oberfläche des Filtermediums (61) gegenüberliegt, befindet, und
die untere Oberfläche der Kappe (40) von der Kraftstoffausgangsöffnung (44) abwärts geneigt ist.

2. Kraftstofffilter (20) nach Anspruch 1, wobei die Kraftstoffausgangsöffnung (44) in einer Mitte der Kappe (40) bereitgestellt ist.

3. Kraftstofffilter (20) nach Anspruch 2, wobei die Kraftstoffausstoßdurchgangsöffnung (67) an einer Stelle bereitgestellt ist, die der Kraftstoffausgangsöffnung (44) gegenüberliegt.

4. Kraftstofffilter (20) nach einem der Ansprüche 1 bis 3, wobei das Kraftstoffausstoßleitelement einzig aus der schrägen Oberflächen gebildet ist.

5. Kraftstofffilter (20) nach einem der Ansprüche 1 bis 4, wobei ein unterer Abschnitt des Gehäuses (30) mit einer Kraftstoffeinlassöffnung (43) versehen ist.

## Revendications

1. Filtre à carburant (20) comprenant : un boîtier (30); et un matériau filtrant (61) disposé dans le boîtier (30), comprenant :
un élément de guidage de décharge de carburant qui forme un espace entre le matériau filtrant (61) et une ouverture de décharge de carburant pour décharger un carburant filtré par le matériau filtrant (61) à l'extérieur du filtre à carburant (20),
**caractérisé en ce que** l'élément de guidage de décharge de carburant a, à l'intérieur de l'espace, une surface inclinée dans laquelle l'ouverture de décharge de carburant est disposée dans la position la plus haute et qui est inclinée vers le bas à partir de l'ouverture de décharge de carburant, et
a) dans lequel le filtre à carburant (20) comprend un capuchon (40) qui ferme une partie ouverte supérieure du boîtier (30) et qui a une ouverture de sortie de carburant (44), dans lequel : l'élément de guidage de décharge de carburant comprend un élément de maintien de matériau filtrant (62) qui maintient une partie supérieure du matériau filtrant (61) ;
l'ouverture de décharge de carburant comprend un trou de passage de décharge de carburant (67) prévu dans une partie de surface supérieure (64a) de l'élément de maintien de matériau filtrant (62) et guide le carburant filtré par le matériau filtrant (61) vers l'ouverture de sortie de carburant (44) ; et
le trou de passage de décharge de carburant (67) est dans la position la plus haute dans la partie de surface supérieure (64a) de l'élément de maintien de matériau filtrant (62) et une partie de surface supérieure (64a) est inclinée vers le bas à partir du trou de passage de décharge de carburant (67), ou bien
b) dans lequel l'élément de guidage de décharge de carburant comprend un capuchon (40) qui ferme la partie ouverte supérieure du boîtier (30) ;
l'ouverture de décharge de carburant comprend une ouverture de sortie de carburant (44) prévue dans le capuchon (40) ;
et le matériau filtrant (61) est maintenu par le capuchon (40), et
l'ouverture de sortie de carburant (44) est dans la position la plus haute dans une surface inférieure du capuchon (40) qui fait face à une surface supérieure du matériau filtrant (61), et
la surface inférieure du capuchon (40) est inclinée vers le bas à partir de l'ouverture de sortie de carburant (44).

2. Filtre à carburant (20) selon la revendication 1, dans lequel l'ouverture de sortie de carburant (44) est prévue au niveau d'un centre du capuchon (40).

3. Filtre à carburant (20) selon la revendication 2, dans lequel le trou de passage de décharge de carburant (67) est prévu dans une position qui fait face à l'ouverture de sortie de carburant (44).

4. Filtre à carburant (20) selon l'une quelconque des revendications 1 à 3, dans lequel l'élément de guidage de décharge de carburant n'est composé que d'une surface inclinée.

5. Filtre à carburant (20) selon l'une quelconque des revendications 1 à 4, dans lequel une partie inférieure du boîtier (30) est prévue avec une ouverture d'entrée de carburant (43).
